# EUROPÄISCHE PATENTSCHRIFT

(11) **EP 3 426 025 B1**
(45) Veröffentlichungstag und Bekanntmachung des Hinweises auf die Patenterteilung: **31.01.2024**
(21) Anmeldenummer: 17708218.7
(22) Anmeldetag: 01.03.2017
(51) Int. Cl.: A01K 63/06, A01K 1/00, A01K 45/00, F21V 9/40, F21V 23/04, F21Y 113/13

(54) **LEUCHTE UND VERFAHREN ZUR STEUERUNG DER SPEKTRALVERTEILUNG DER LEUCHTE**
LAMP AND METHOD TO CONTROL THE SPECTRAL DISTRIBUTION OF THE LAMP
LAMPE ET MÉTHODE POUR CONTROLER LA RÉPARTITION SPECTRALE DE LA LAMPE

(30) Priorität: 10.03.2016 DE 102016203978
(43) Veröffentlichungstag der Anmeldung: 16.01.2019
(73) Patentinhaber: Eaton Intelligent Power Limited, Dublin 4 (IE)
(72) Erfinder: OTT, Toni, 69151 Neckargemünd (DE); BURMEISTER, Jens, 69412 Eberbach (DE)
(74) Vertreter: Novagraaf Group
(86) Internationale Anmeldenummer: PCT/EP2017/054709
(87) Internationale Veröffentlichungsnummer: WO 2017/153215

(56) Entgegenhaltungen:
- WO-A1-2009/029575
- DE-A1-102013 007 128
- DE-U1-202006 001 686
- GB-A- 2 460 228
- US-A1- 2005 168 982
- US-A1- 2010 277 097
- US-A1- 2012 112 640
- US-B1- 8 960 954

## Beschreibung

Die Erfindung betrifft eine Leuchte mit wenigstens einem Leuchtmittel in einem Leuchtengehäuse, welches zumindest eine Lichtaustrittsöffnung zum Austritt eines Lichtbündels aus dem Leuchtengehäuse aufweist.

Eine solche Leuchte kann eine Deckenleuchte, abgehängte Leuchte, Pendelleuchte, Mastleuchte oder Notleuchte sein, wobei eine solche Notleuchte wie eine der vorangehend genannten Leuchten ausgebildet sein kann. Eine solche Notleuchte kann auch eine Ex-Leuchte sein.

Das entsprechende Leuchtmittel gibt Licht in einem Spektralbereich ab, der im Wesentlichen dem sichtbaren Spektralbereich entspricht. Der sichtbare Spektralbereich umfasst einen Wellenlängenbereich von ungefähr 380nm bis 780nm. Außerdem können die entsprechenden Leuchtmittel auch zusätzlich Licht in angrenzenden Bereichen, d.h. im IR-Bereich oder UV-Bereich abgeben. Das entsprechende Licht tritt in Form eines Lichtbündels aus der Lichtaustrittsöffnung des Leuchtengehäuses aus und hat in der Regel einen Einfluss auf die Umgebung, besonders auf natürliche Aktivitäten von Tieren und entsprechende Tierarten. Dies liegt daran, dass bestimmte Tiere bzw. Tierarten eine höhere Empfindlichkeit im bestimmten Spektralbereich des sichtbaren Lichts oder der angrenzenden Bereiche aufweisen und gegebenenfalls durch in diesen Spektralbereichen abgegebenes Licht negativ oder umgekehrt auch positiv beeinflusst werden.

Beispielsweise wurde bei Schildkröten festgestellt, dass diese abhängig von der Schildkrötenart, dem Alter der Schildkröte oder auch dem Lebensbereich der Schildkröte unterschiedliche Lichtempfindlichkeiten aufweisen. Bei erwachsenen Schildkröten wurde beispielsweise festgestellt, dass diese bei einer bestimmten Art von Licht angezogen werden, das im gelb-orangenem bis rotem Bereich des Spektrums liegt, d.h. in einem Wellenbereich von 630nm bis 700nm. Bei einer anderen Schildkrötenart wurde festgestellt, dass diese beispielsweise zwei höhere Empfindlichkeitsbereiche um eine Wellenlänge von 640nm und 575nm aufweisen. Weiterhin wurde durch Untersuchungen festgestellt, dass die entsprechende spektrale Empfindlichkeit sich mit dem Alter der Schildkröten ändert, sodass Jungtiere andere spektrale Empfindlichkeiten als Alttiere zeigen. Im Hinblick auf eine Eiablage der erwachsenen Tiere bzw. im Hinblick auf das Schlüpfen der Jungtiere kann die entsprechende spektrale Empfindlichkeit bei einer Beleuchtung entsprechender Bereiche berücksichtigt werden. Wobei weiterhin zu beachten ist, dass die Eiablage je nach Schildkrötenart zu unterschiedlichen Zeiten erfolgen kann, ebenso wie das Schlüpfen entsprechender Jungtiere.

In diesem Zusammenhang ist weiter zu berücksichtigen, dass auch Helligkeit und Richtung der Beleuchtung gegebenenfalls zu beachten sind, da gerade geschlüpfte Jungtiere durch eine zu große Helligkeit der Beleuchtung auf ihrem Weg zum Wasser in die Irre geführt, oder gegebenenfalls einen zu weiten Weg zurücklegen und damit Opfer von Fressfeinden werden können.

Die entsprechende spektrale Empfindlichkeit kann selbst bei gleichen Schildkrötenarten unterschiedlich sein, abhängig von dem Lebensraum, der Tiefe des dort vorhandenen Wassers, der Sauberkeit des Wassers und dergleichen. In der Regel ist die Empfindlichkeit von Schildkröten höher für kurze Wellenlängen des sichtbaren Lichts, weil diese höchstwahrscheinlich in der maritimen Umgebung weniger gefiltert wird als Licht mit größeren Wellenlängen. Dies kann allerdings bei Schildkrötenarten anders sein, die sich mehr im Oberflächenwasser aufhalten und weniger tief tauchen.

Entsprechende spektrale Empfindlichkeiten gibt es auch bei anderen Lebewesen bzw. Tieren. Beispielsweise wurden bei Zugvögeln unterschiedlicher Arten ebenfalls unterschiedliche spektrale Empfindlichkeiten festgestellt. D.h., auch bei solchen Zugvögeln kann eine Veränderung des Spektralbereichs des abgegebenen Lichts sinnvoll sein, um diese beim Brüten oder Fliegen nicht negativ zu beeinflussen.

Außerdem gibt es weitere Tiere wie Pinguine, Gänse, Fledermäuse oder dergleichen, die alle je nach ihrer Art unterschiedlich auf bestimmte Spektralbereiche reagieren.

US 2010/277097 A1 beschreibt ein Beleuchtungssystem mit wenigstens zwei Beleuchtungsmitteln. Weiterhin werden ein Lichtsensor und eine Spannungsversorgung beschrieben. Es besteht die Möglichkeit, unter Verwendung nur der ersten Beleuchtungseinrichtung, ein bestimmtes Licht und dann, unter Verwendung der zweiten Beleuchtungseinrichtung, ein anderes Licht zu erzeugen.

US 8,960,954 B1 beschreibt ein Lichtsteuersystem, insbesondere für Seeschildkröten. Ein Selektorschalter wird verwendet, um unterschiedliche Lampen oder Leuchten, insbesondere in Abhängigkeit von der Jahreszeit, einzuschalten.

WO 2009/029575 A1 beschreibt eine Beleuchtung, die an Tiere angepasst ist. Es werden erste oder zweite Lichtquellen verwendet, um diese in Abhängigkeit von der Tageszeit oder dergleichen einzusetzen,

DE 10 2013 007 128 A1 beschreibt ein LED-Beleuchtungssystem mit einer Anzahl von LEDs und der Möglichkeit zur Änderung der Farbe. Ein bestimmter Spektralbereich wird zur Beleuchtung eines spezifischen Tieres und ein anderer Spektralbereich wird zur ausreichenden Sichtbarkeit für das entsprechende Tier verwendet.

Aufgabe vorliegender Erfindung ist es, eine Leuchte der eingangs genannten Art und ein entsprechendes Verfahren dahingehend zu verbessern bzw. bereitzustellen, um eine Spektralverteilung der entsprechenden Leuchte an entsprechende spektrale Empfindlichkeiten der Tiere bzw. deren Farbwahrnehmung anzupassen, damit diese Tiere/Tierarten zu bestimmten Zeiten nicht negativ beeinflusst werden, sodass diese beispielsweise in ihrem Brutverhalten oder in ihrem sonstigen Verhalten gestört werden. Gleichzeitig soll allerdings eine ausreichende Ausleuchtung mittels der Leuchte für Menschen beispielsweise entlang von Wegen, auf Plätzen oder dergleichen gegeben sein.

Die Aufgabe wird durch die Merkmale des Patentanspruchs 1 gelöst. D.h., erfindungsgemäß ist dem Leuchtmittel und/oder dem Leuchtengehäuse eine eine Spektralverteilung des Lichtbündels insbesondere zeitlich variierende Spektralverteilungsvariationseinrichtung zugeordnet.

Verfahrensmäßig erfolgt eine Abgabe eines durch die Lichtaustrittsöffnung austretenden Lichtbündels und eine Variation der Spektralverteilung des Lichtbündels durch gesteuertes Ein- und Ausschalten unterschiedlicher Leuchtmittelgruppen und/oder Einzelleuchtmittel des Leuchtmittels und/oder durch gesteuertes Verstellen einer Filtereinrichtung. Durch diese insbesondere zeitlich variierende Spektralverteilung des abgegebenen Lichts erfolgt beispielsweise eine Anpassung der Spektralverteilung an die entsprechenden spektralen Empfindlichkeiten von bestimmten Tieren/Tierarten. Dadurch wird verhindert, dass diese durch entsprechendes Licht abgeschreckt oder falsch geleitet werden. Außerdem erfolgt eine zeitliche Steuerung der Spektralverteilung, um beispielsweise im Hinblick auf Schildkröten die unterschiedlichen spektralen Empfindlichkeiten von Jung- und Alttieren beim Schlüpfen bzw. bei der Eiablage zu berücksichtigen. D.h., insbesondere jahresabhängig erfolgt zu unterschiedlichen Zeiten eine unterschiedliche Variation des Spektralbereichs. Dies gilt ebenso für beispielsweise Zugvögel, die zu bestimmten Zeiten in bestimmte Gegenden ziehen, sodass nur zu diesen Zeiten gegebenenfalls die entsprechende Variation der Spektralverteilung zu beachten ist.

insbesondere bei einer Abgabe von weißem Licht durch die erfindungsgemäße Leuchte kann es sich als vorteilhaft erweisen, wenn die zeitliche Beeinflussung der Spektralverteilung beispielsweise durch eine der Leuchte und insbesondere der Lichtaustrittsöffnung zugeordnete, wenigstens eine Filtereinrichtung erfolgt. Die Filtereinrichtung wird je nach Erfordernis eingesetzt, um dadurch die Spektralverteilung zu variieren und bestimmte Spektralbereiche auszufiltern. Auf diese Weise kann ebenfalls diese entsprechende Variation der Spektralverteilung im Hinblick auf unterschiedliche spektrale Empfindlichkeiten entsprechender Tiere oder Tierarten zu entsprechenden Zeiten erfolgen.

Die Filtereinrichtung und damit die entsprechenden Spektralbereichsfilter ist bzw. sind relativ zur Lichtaustrittsöffnung bewegbar. Dadurch wird je nach Erfordernis die Filtereinrichtung an sich eingesetzt oder ein entsprechender Spektralbereichsfilter zur Variation der Spektralverteilung ausgewählt und beispielsweise in das aus der Lichtaustrittsöffnung austretende Lichtbündel hinein bewegt.

Es sei an dieser Stelle darauf hingewiesen, dass keine konkreten Bereiche zur Variation der Spektralverteilung angegeben werden, da diese von der Tierart, vom Alter der Tiere einer Tierart, gegebenenfalls von der Umgebungsbeleuchtung im Laufe eines Tages, von dem Lebensbereich der entsprechenden Tierart und weiteren Parametern abhängen. Allerdings gibt es bereits Untersuchungen unterschiedlicher Tierarten, die solche verschiedenen Abhängigkeiten zeigen, um dann im Hinblick auf die entsprechenden Parameter eine Variation der Spektralverteilung erfindungsgemäß vorzunehmen.

Durch die entsprechende zeitliche Variation der Spektralverteilung kann berücksichtigt werden, dass Jungtiere von beispielsweise Schildkröten zu einer bestimmten Zeit schlüpfen und sich auf dem Weg zum Meer machen. Während dieser Zeit wird Licht mit einer bestimmten Spektralverteilung emittiert, die passend für diese Jungtiere ist, um sie möglichst wenig auf ihrem Weg zum Meer zu beeinträchtigen und gleichzeitig nicht abzuschrecken. Eine andere Spektralverteilung wird verwendet, wenn beispielsweise erwachsene Tiere zur Eiablage das Meer verlassen. Weiterhin kann zu Zeiten, in denen keine Beeinträchtigung von Jungtieren oder erwachsenen Tieren zu befürchten ist, eine wiederum andere Spektralverteilung verwendet werden, dazu diesem Zeitraum keine Rücksichtnahme auf entsprechende Jungtiere oder erwachsene Tiere erforderlich ist.

Dies gilt analog für andere Tierarten, wie Zugvögel, Fledermäuse, Gänse, Hühner oder dergleichen, die alle nur zu bestimmten Zeiten in einem Bereich sich aufhalten und nur zu solchen Zeiten dann eine entsprechende Beeinflussung des Spektralbereichs bei der erfindungsgemäßen Leuchte erfolgt.

Es sind unterschiedliche Möglichkeiten denkbar, durch die die Spektralverteilung variierbar ist. Eine Möglichkeit ist ein Leuchtmittel, welches Leuchtmittelgruppen mit jeweils unterschiedlicher Spektralverteilung aufweist. Je nach Erfordernis werden entsprechende Leuchtmittelgruppen ein- oder ausgeschaltet, wobei auch mehrere Leuchtmittelgruppen gleichzeitig eingeschaltet sein können, wodurch sich die unterschiedlichen Spektralverteilungen einer jeden Leuchtmittelgruppe überlagern und eine Gesamtspektralverteilung ergeben.

Ebenfalls denkbar ist, dass das Leuchtmittel aus separat schaltbaren Einzelleuchtmitteln gebildet ist, welche jeweils beispielsweise unterschiedliche Farben aufweisen. Von diesen Einzelleuchtmitteln können unterschiedliche Anzahlen gleicher Farbe und/oder unterschiedlicher Farben eingesetzt werden, um eine bestimmte Spektralverteilung zu erreichen.

In beiden Fällen ist außerdem die Helligkeit der Leuchtmittelgruppen bzw. Einzelleuchtmittel variierbar.

Wie bereits oben ausgeführt, ist nicht nur eine unterschiedliche Spektralverteilung Ziel vorliegender Erfindung, sondern insbesondere eine zeitliche Variation der Spektralverteilung, um die Spektralverteilung an unterschiedliche Tiere/Tierarten, unterschiedliche spektrale Empfindlichkeiten und dergleichen anpassen zu können. Dies erfolgt in der Regel in einfacher Weise durch eine dem Leuchtmittel zugeordnete Leuchtmittelsteuerung. Diese kann beispielsweise die oben genannten Leuchtmittelgruppen oder Einzelleuchtmittel je nach Erfordernis ein- und ausschalten oder unterschiedlich ansteuern.

Die Leuchtmittelsteuerung kann manuell zu bestimmten Zeiten verwendet werden, um eine entsprechende Spektralverteilung einzustellen. Ebenfalls denkbar ist, dass die Leuchtmittelsteuerung eine Zeitsteuerung aufweist, durch die die Spektralverteilung zu bestimmten Zeiten in anderer Weise variiert wird. Für eine solche Zeitsteuerung ist sowohl eine manuelle als auch eine automatische Einstellbarkeit denkbar. Steht fest, dass entsprechende Tiere bzw. Tierarten mit bekannter spektraler Empfindlichkeit sich zu gewissen Zeiten in dem beleuchteten Bereich aufhalten, kann die Spektralverteilung zu diesen Zeiten an die spektrale Empfindlichkeit der Tiere bzw. Tierarten angepasst werden. Dies kann insbesondere automatisch erfolgen, wenn dies immer zu gleichen Zeiten erfolgt.

Bei gewissen Tieren und Tierarten ist weiterhin zu beachten, dass nicht nur die Spektralverteilung angepasst werden sollte, sondern ebenfalls die Helligkeit der entsprechenden Leuchte oder auch die Abstrahlrichtung variiert werden sollte. Dazu kann die Leuchtmittelsteuerung eine Helligkeits- und/oder Richtungssteuerung zur Variation von Helligkeit und/oder Richtung des Lichtbündels aufweisen. Beispielsweise wurde bei gerade geschlüpften Schildkröten festgestellt, dass diese bei einer zu starken Beleuchtung selbst im für sie angenehmen Spektralbereich Orientierungsschwierigkeiten aufweisen, um beispielsweise den Weg zum Meer zu finden. D.h., in diesem Fall sollte nicht nur eine entsprechende Anpassung des Spektralbereichs der Leuchte, sondern auch eine Anpassung der Helligkeit und/oder der Abstrahlrichtung des Lichtbündels erfolgen. Dies ist insbesondere zu beachten, da normalerweise Schildkröten während der Nacht schlüpfen und sich dann auf den Weg zum Meer machen. Eine zu helle Beleuchtung insbesondere in Richtung Meer kann dazu führen, dass die gerade geschlüpften Jungtiere sich in einer falschen Richtung zum vermeintlichen Meer bewegen, wobei sie durch die künstliche Beleuchtung desorientiert sind. Um eine einfache Möglichkeit zur Variation der Spektralverteilung im Hinblick auf mehrere Tiere bzw. Tierarten und zu unterschiedlichen Zeiten zu ermöglichen, kann die Filtereinrichtung verschiedene Spektralbereichsfilter aufweisen. Je nach Erfordernis wird ein entsprechender Spektralbereichsfilter eingesetzt.

Erfindungsgemäss und zur Ermöglichung einer einfachen Anordnung von Filtereinrichtung und Leuchtengehäuse sowie deren relativer Beweglichkeit zueinander, ist vorgesehen dass

Leuchtengehäuse und Filtereinrichtung rohrförmig und entsprechend relativ zueinander drehbar sind. Wie bereits vorher ausgeführt, kann eine Bewegung der Filtereinrichtung ähnlich wie die oben genannte Betätigung der Leuchtmittel- bzw. zur Zeitsteuerung manuell oder automatisch erfolgen.

Bei einer entsprechenden automatischen Steuerung ist es weiterhin gegebenenfalls von Vorteil, wenn der Filtereinrichtung eine Filtersteuerung zugeordnet ist. Diese kann automatisch und insbesondere auch zeitgesteuert die Filtereinrichtung bzw. die entsprechenden Spektralbereichsfilter einsetzen, um beispielsweise tageszeitabhängig oder auch jahreszeitabhängig die Spektralverteilung an sich und für gewisse Zeiten zu variieren.

Um neben der Variation der Spektralverteilung auch die Helligkeit der Leuchte in einfacher Weise anpassen zu können, kann der Leuchte ein Helligkeitssensor zugeordnet sein. Es ist natürlich ebenfalls denkbar, dass ein solcher Helligkeitssensor mehreren Leuchten gleichzeitig zugeordnet ist. Durch den Helligkeitssensor kann beispielsweise die Helligkeit der Leuchte angepasst werden, um diese in einem gewissen Maße zu dimmen, um eine negative Beeinflussung entsprechender Tiere bzw. Tierarten, siehe die obigen Ausführungen, zu vermeiden.

An dieser Stelle sei weiterhin darauf hingewiesen, dass die genannten Maßnahmen zur Beeinflussung der Spektralverteilung in der Regel wenig Einfluss auf Menschen haben, da diese eine Beleuchtung entsprechender Wege oder Straßen oder dergleichen auch mit variierter Spektralverteilung in der Regel als ausreichend betrachten. Außerdem kann auch im Hinblick auf Tätigkeiten der Menschen die Spektralverteilung variiert werden, sodass zwischen negativer bzw. positiver Beeinflussung der Tiere bzw. Tierarten und der Menschen abgewogen werden kann.

Die Erfindung betrifft ebenfalls ein entsprechendes Verfahren zur Steuerung einer Spektralverteilung einer Leuchte gemäß Patentanspruch 9.

Es ist selbstverständlich möglich, dass die genannten Einrichtungen zur Beeinflussung der Spektralverteilungen nicht nur für sich, sondern auch in Kombination eingesetzt werden können.

D.h., es können beispielsweise Leuchtmittelgruppen und Einzelleuchtmittel gleichzeitig bei einer entsprechenden Leuchte zur Variation der Spektralverteilung verwendet werden. Dies gilt analog für die Filtereinrichtung in Zusammenhang mit Leuchtmittelgruppen und/oder Einzelleuchtmitteln.

D.h., durch die Filtereinrichtung kann eine bereits durch die Leuchtmittelgruppen bzw. Einzelleuchtmittel variierte Spektralverteilung weiter variiert werden.

Eine entsprechende Beeinflussung der Spektralverteilung erfolgt in der Regel zeitgesteuert, wobei bei der Abgabe des Lichtbündels Helligkeit und/oder Richtung zusätzlich variiert werden können.

Da bestimmte Tiere oder Tierarten nicht nur im sichtbaren Bereich des Spektrums eine entsprechende Empfindlichkeit aufweisen, kann die Beeinflussung der Lichtabgabe erfindungsgemäß nicht nur im sichtbaren Bereich, sondern gegebenenfalls auch in dazu benachbarten Bereichen im UV- und IR-Bereich erfolgen. Entsprechend ist auch eine Beeinflussung des Spektrums in diesen Bereichen möglich.

Durch die verschiedenen Einstellmöglichkeiten gemäß Erfindung ist außer einer Variante von Spektralverteilung, Helligkeit, Lichtabgaberichtung und dergleichen ebenfalls auch eine Beeinflussung des Farbwiedergabeindex möglich. Ein solcher Farbwiedergabeindex ist eine Kennzahl, mit der die Qualität der Farbwiedergabe von Lichtquellen gleicher korrelierter Farbetemperatur beschrieben wird.

Zusammenfassend dient vorliegende Erfindung dazu, unterschiedliche Farbwahrnehmungen von entsprechenden Tieren bzw. Tierarten im Vergleich zum Menschen zu berücksichtigen und eine entsprechende Leuchte dahingehend anzupassen, dass der Spektralbereich des abgegebenen Lichts beeinflusst wird. Neben der Variation des Spektralbereichs kann ebenfalls eine Variation von Helligkeit, Lichtabgaberichtung und dergleichen erfolgen. Da die Farbwahrnehmung bzw. spektrale Empfindlichkeit entsprechender Tiere selbst einer Tierart, und insbesondere auch bei unterschiedlichen Tierarten verschieden ist, dient die Erfindung zur Anpassung der Spektralverteilung je nach Erfordernis im Hinblick auf die verschiedenen Tiere bzw. Tierarten. Die entsprechende Anpassung erfolgt in Abhängigkeit von der jeweiligen Tierart bzw. den entsprechenden Tieren und wird auf entsprechende Erkenntnisse der spektralen Empfindlichkeit bzw. Farbwahrnehmung dieser Tiere bzw. Tierarten Rücksicht nehmen. Dazu kann auf bereits vorliegende Erkenntnisse in dieser Hinsicht zurückgegriffen werden oder aber die entsprechenden Empfindlichkeiten bzw. Farbwahrnehmungen werden für die jeweiligen Tiere bzw. Tierarten noch zusätzlich festgestellt.

Im Folgenden wird die Erfindung anhand der in den Zeichnungen beigefügten Figuren näher erläutert und beschrieben.

Es zeigen:
- Figur 1: eine perspektivische Seitenansicht von schräg unten auf ein Ausführungsbeispiel einer erfindungsgemäßen Leuchte;
- Figur 2: eine Darstellung analog zur Figur 1 mit Filtereinrichtung;
- Figur 3: einen Schnitt senkrecht zur Längsrichtung der Leuchte nach Figur 1;
- Figur 4: einen Schnitt analog zur Figur 3 für eine andere Stellung der Filtereinrichtung;
- Figur 5: eine Prinzipdarstellung einer Leuchte mit einer Anzahl von Leuchtmittelgruppen, und
- Figur 6: eine Leuchte analog zur Figur 5 mit einer Reihe von Einzelleuchtmitteln.

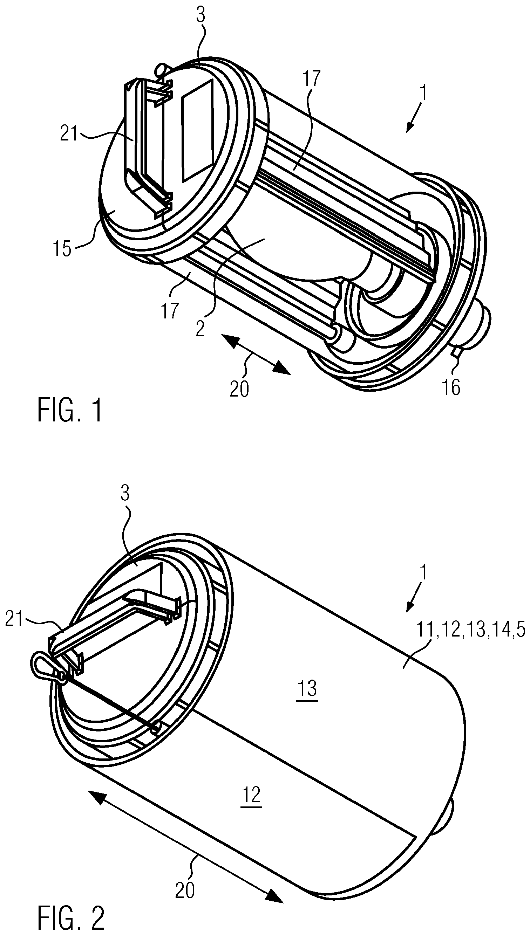

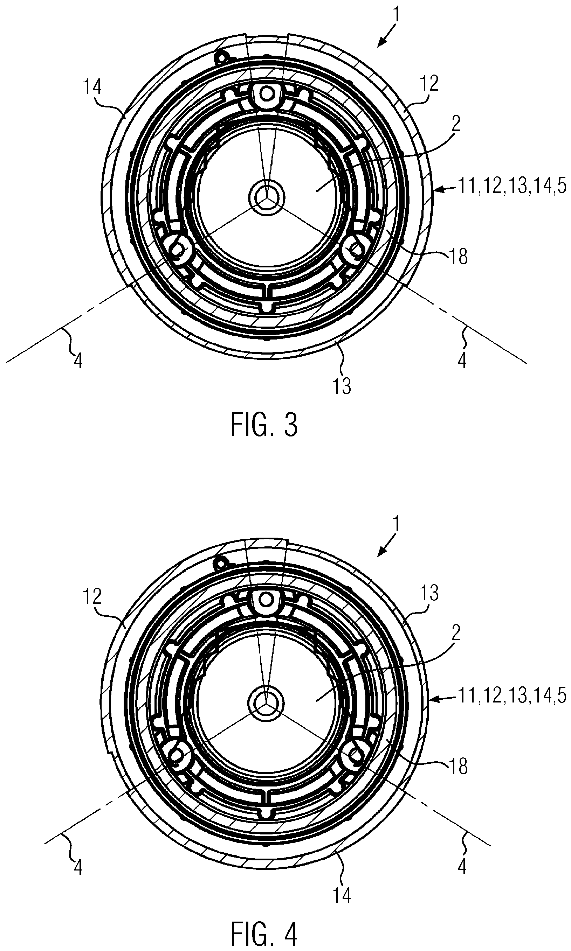

In Figur 1 ist eine perspektivische Ansicht von schräg unten auf ein Ausführungsbeispiel einer erfindungsgemäßen Leuchte 1 dargestellt. Diese ist im Wesentlichen rohrförmig und erstreckt sich in Längsrichtung 20. Innerhalb der Leuchte ist ein Leuchtmittel 2 angeordnet. Um das Leuchtmittel herum sind beispielsweise Reflektionseinrichtungen 17 angeordnet, die vom Leuchtmittel 2 abgegebenes Licht in Richtung einer Lichtaustrittsöffnung 4 lenken, siehe auch Figuren 3 und 4. Das Leuchtmittel 2 ist von einem Glasrohr 18 umgeben, siehe nochmals Figuren 3 und 4, welches von einer ebenfalls rohförmigen Filtereinrichtung 11 umgeben ist. Diese ist in Figur 2 dargestellt und

in Figur 1 zur Vereinfachung weggelassen. An beiden Enden der Leuchte 1 sind entsprechende Enddeckel angeordnet, die sowohl zur Halterung des Glasrohres 18 als auch zur drehbaren Halterung der Filtereinrichtung 11 dienen. Die Filtereinrichtung 11 ist beispielsweise mittels eines Handgriffs 21 relativ zum Glasrohr und damit zum Leuchtmittel 2 verdrehbar. Außerdem kann in zumindest einem der Deckel eine entsprechende Filtersteuerung 15 zur automatischen Drehung der Filtereinrichtung 11 angeordnet sein.

In Figur 1 ist weiterhin an einem Ende der Leuchte 1 ein Helligkeitssensor 16 zur Detektion der Umgebungshelligkeit angeordnet. Dieser kann ebenso dazu dienen, die Helligkeit des von der Leuchte 1 abgegebenem Lichts in einem bestimmten Bestrahlungsbereich zu detektieren, und die Leuchte gegebenenfalls in ihrer Helligkeit zu reduzieren oder zu erhöhen.

In Figur 2 ist eine Ansicht analog zur Figur 1 mit Filtereinrichtung 11 dargestellt, wobei diese in dem beschriebenen Ausführungsbeispiel drei Spektralbereichsfilter 12, 13 und 14 aufweist. Diese sind in Umfangsrichtung der Leuchte 1 hintereinander angeordnet, sodass jeweils ein bestimmter Spektralbereichsfilter der Lichtaustrittsöffnung, siehe auch Figuren 3 und 4, zuordbar ist. Durch entsprechende Anordnung eines Spektralbereichsfilters 12 bis 14 erfolgt eine Variation des von der Leuchte 1 abgegebenen Lichts in seiner Spektralverteilung.

Wie bereits ausgeführt, kann die entsprechende Drehung der Filtereinrichtung 11 relativ zum übrigen Leuchtengehäuse 3 manuell und /oder automatisch erfolgen.

In den Figuren 3 und 4 ist jeweils ein Schnitt senkrecht zur Längsrichtung 20 durch die Leuchte 1 nach Figur 1 bzw. 2 dargestellt. Die Figuren 3 und 4 unterscheiden sich in der Zuordnung eines jeweiligen Spektralbereichsfilters 12 bis 14 zur entsprechenden Lichtaustrittsöffnung 4, die durch die beiden unter einem Winkel schräg nach unten in der Figurenebene verlaufenden Geraden beschrieben ist. Innerhalb der Leuchte 1 ist das Leuchtmittel 2 angeordnet. Dieses ist vom Glasrohr 18 und der Filtereinrichtung 11 umgeben.

In Figur 3 ist der Spektralbereichsfilter 13 der Lichtaustrittsöffnung 4 und in Figur 4 der Spektralbereichsfilter 14 der Lichtaustrittsöffnung 4 zugeordnet.

Durch die entsprechenden Spektralbereichsfilter 13 bzw. 14 nach Figuren 3 und 4 erfolgt ein Filtern des abgegebenen Lichts zur Variation einer Spektralverteilung. Diese Variation erfolgt hinsichtlich entsprechenden Farbwahrnehmungen oder spektraler Empfindlichkeiten von Tieren bzw. Tierarten. Dies wurde im Eingangsteil der Anmeldung ausführlicher beschrieben.

Die Zuordnung des Spektralbereichsfilters 12 bis 14 zur Lichtaustrittsöffnung 4 erfolgt zeitlich gesteuert, sodass beispielsweise tageszeitabhängig oder auch jahreszeitabhängig Licht mit bestimmter Spektralverteilung abgegeben wird. Der entsprechende Spektralbereichsfilter liegt jeweils im Abstrahlbereich der erfindungsgemäßen Leuchte und insbesondere in Richtung zu einem auszuleuchtenden Bereich.

Erfindungsgemäß besteht die Möglichkeit, dass die rohrförmige Filtereinrichtung manuell oder durch die entsprechende Filtersteuerung in die jeweilige Position verdreht wird. Die Filtersteuerung kann zusätzlich eine Zeitsteuerung aufweisen, die entsprechend tageszeitabhängig oder auch jahreszeitabhängig die Relativverdrehung der Filtereinrichtung relativ zum übrigen Leuchtengehäuse 3 durchführt.

Das entsprechende Leuchtmittel 2 nach den Figuren 1 bis 4 kann ein Leuchtmittel sein, das hauptsächlich Licht im sichtbaren Bereich von ungefähr 380nm bis 780nm abgibt. Außerdem kann abgegebenes Licht direkt benachbarte Bereiche dieses Spektralbereichs umfassen, wie beispielsweise UV- und IR-Bereiche. Die Filterung durch die Filtereinrichtung kann außer im sichtbaren Bereich auch in diesen Randbereichen des entsprechenden Spektralbereichs erfolgen.

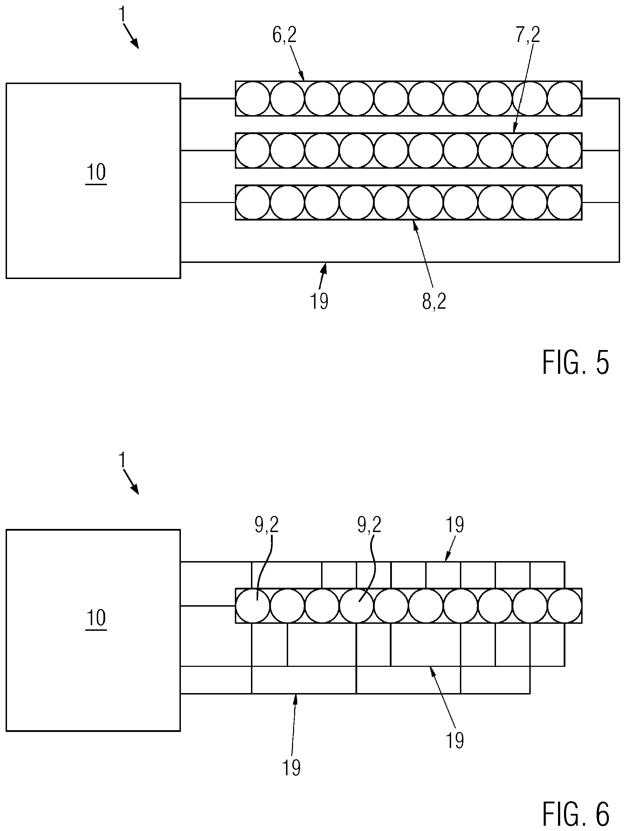

Figuren 5 und 6 zeigen eine alternativ oder auch in Kombination einsetzbare Möglichkeit zur Beeinflussung der Spektralverteilung. In diesem Zusammenhang wird das Leuchtmittel 2 durch eine Reihe von Leuchtmittelgruppen 6, 7, 8 bzw. Einzelleuchtmitteln 9 gebildet. Diese sind über eine Verdrahtung 19 mit einer Leuchtmittelsteuerung 10 verbunden. Durch diese besteht die Möglichkeit, beispielsweise unterschiedliche Leuchtmittelgruppen 6, 7, 8 ein- und auszuschalten bzw. Einzelleuchtmittel 9 entsprechend anzusteuern.

Die verschiedenen Leuchtmittel der Leuchtmittelgruppen bzw. die Einzelleuchtmittel weisen unterschiedliche Farben auf, sodass sich durch Auswahl entsprechender Helligkeiten, Anzahl und Farbe der Leuchtmittel eine entsprechende Spektralverteilung ergibt. Diese ist ebenso wie die vorangehende Spektralverteilung variabel und insbesondere zeitgesteuert variierbar.

Es besteht ebenfalls die Möglichkeit, dass entsprechende Leuchtmittelgruppen 6, 7, 8 mit Einzelleuchtmitteln 9 und umgekehrt kombiniert werden. Außerdem kann eine entsprechende Leuchte 1 nach Figuren 5 und 6 analog zu den Figuren 1 bis 4 eine Filtereinrichtung 11 und insbesondere eine solche mit Spektralbereichsfiltern 12, 13, 14 aufweisen.

Die entsprechende Leuchtmittelsteuerung 10 dient zum Betätigen der entsprechenden Leuchtmittel nach Figuren 5 und 6 und zur zeitlichen Steuerung dieser zur Variation der entsprechenden Spektralverteilung. Die Leuchtmittelsteuerung 10 kann außerdem eine entsprechende Filtersteuerung 15 umfassen.

Die Einzelleuchtmittel können unterschiedliche Farben aufweisen wie auch die Leuchtmittel einer entsprechenden Leuchtmittelgruppe. Außerdem kann erfindungsgemäß der Farbwiedergabeindex variierbar sein, je nachdem welche Leuchten und Spektralbereichsfilter eingesetzt werden. Erfindungsgemäß ergibt sich somit die Möglichkeit, zeitgesteuert unterschiedliche spektrale Empfindlichkeiten von Tieren bzw. Tierarten zu berücksichtigen, indem gegebenenfalls bestimmte Spektralbereiche verstärkt und/oder unterdrückt werden und somit beispielsweise die Tiere bzw. Tierarten in ihrem Brutverhalten, in ihrem Sozialverhalten, in ihrem Zug- und Schlüpfverhalten oder dergleichen nicht negativ beeinflusst werden. Gleichzeitig soll eine ausreichende Beleuchtung für Menschen in entsprechenden Bereichen wie Wegen, Straßen, Betriebsgeländen oder dergleichen aufrechterhalten werden.

## Patentansprüche

1. Leuchte (1) mit wenigstens einem Leuchtmittel (2) in einem Leuchtengehäuse (3), welches zumindest eine Lichtaustrittsöffnung (4) zum Austritt eines Lichtbündels aus dem Leuchtengehäuse aufweist, dem Leuchtmittel (2) und/oder dem Leuchtengehäuse (3) eine Spektralverteilung des Lichtbündels zeitlich variierende Spektralverteilungsvariationseinrichtung (5) zugeordnet ist, wobei der Leuchte (1) und insbesondere der Lichtaustrittsöffnung (4) wenigstens eine Filtereinrichtung (11) zur Variation der Spektralverteilung zugeordnet ist, welche Filtereinrichtung (11) einen Spektralbereichsfilter (12, 13, 14) aufweist und relativ zur Lichtaustrittsöffnung (4) bewegbar ist,
**dadurch gekennzeichnet, dass**:
Leuchtengehäuse (3) und Filtereinrichtung (11) im Wesentlichen rohrförmig und relativ zueinander drehbar sind.

2. Leuchte nach Anspruch 1, **dadurch gekennzeichnet, dass** das Leuchtmittel (2) Leuchtmittelgruppen (6, 7, 8) mit jeweils unterschiedlicher Spektralverteilung aufweist.

3. Leuchte nach Anspruch 1 oder 2, **dadurch gekennzeichnet, dass** das Leuchtmittel (2) aus separat schaltbaren Einzelleuchtmitteln (9) insbesondere unterschiedlicher Farben gebildet ist.

4. Leuchte nach einem der vorangehenden Ansprüche, **dadurch gekennzeichnet, dass** dem Leuchtmittel (2) eine Leuchtmittelsteuerung (1 0) zugeordnet ist.

5. Leuchte nach einem der vorangehenden Ansprüche, **dadurch gekennzeichnet, dass** die Leuchtmittelsteuerung (1 0) eine Zeitsteuerung aufweist, welche insbesondere manuell einstellbar oder automatisch einstellbar ist.

6. Leuchte nach einem der vorangehenden Ansprüche, **dadurch gekennzeichnet, dass** die Leuchtmittelsteuerung (1 0) eine Helligkeits- und/oder Richtungssteuerung zur Variation von Helligkeit und/oder Richtung des Lichtbündels aufweist.

7. Leuchte nach einem der vorangehenden Ansprüche, **dadurch gekennzeichnet, dass** der Filtereinrichtung (11) eine Filtersteuerung (15) zugeordnet ist.

8. Leuchte nach einem der vorangehenden Ansprüche, **dadurch gekennzeichnet, dass** der Leuchte (1) ein Helligkeitssensor (16) zugeordnet ist.

9. Verfahren zur Steuerung einer Spektralverteilung einer Leuchte (1) mit wenigstens einem Leuchtmittel (2) in einem Leuchtengehäuse (3), welches zumindest eine Lichtaustrittsöffnung (4) zum Austritt eines Lichtbündels aus dem Leuchtengehäuse aufweist, **gekennzeichnet durch** folgende Schritte:
i) Abgabe eines durch die Lichtaustrittsöffnung (4) austretenden Lichtbündels; und
ii) Variation der Spektralverteilung des Lichtbündels durch gesteuertes Ein- und Ausschalten unterschiedlicher Leuchtmittelgruppen (6, 7, 8) und/oder Einzelleuchtmittel (9) als Leuchtmittel (2) und/oder gesteuertes Verstellen einer Filtereinrichtung (11) , wobei die Filtereinrichtung einen Spektralbereichsfilter (12, 13, 14) aufweist und relativ zur Lichtaustrittsöffnung (4) bewegbar ist, indem Leuchtengehäuse (3) und Filtereinrichtung (11) im Wesentlichen rohrförmig sind und sich relativ zueinander drehen.

10. Verfahren nach Anspruch 9, wobei die Variation der Spektralverteilung im Schritt ii) zeitgesteuert erfolgt.

11. Verfahren nach Anspruch 9 oder 10, wobei die Abgabe des Lichtbündels mit variabler Helligkeit und/oder in variabler Richtung erfolgt.

12. Verfahren nach einem der Ansprüche 9 bis 11, wobei die Lichtabgabe des Leuchtmittels (2) im sichtbaren Bereich und gegebenenfalls in dazu benachbarten Bereichen im UV-Bereich und IR-Bereich erfolgt.

13. Verfahren nach einem der Ansprüche 9 bis 12, wobei die Lichtabgabe mit einstellbarem Farbwiedergabeindex erfolgt und/oder ein Messen einer Umgebungshelligkeit der Leuchte (1) mittels Helligkeitssensor (16) erfolgt, um die Leuchte in ihrer Helligkeit zu reduzieren oder zu erhöhen.

## Claims

1. Lamp (1) having at least one lighting means (2) in a lamp housing (3), which lamp housing comprises at least one light output opening (4) for outputting a light beam from the lamp housing, a spectral distribution variation device (5), which varies a spectral distribution of the light beam over time, being associated with the lighting means (2) and/or the lamp housing (3), at least one filter device (11) for varying the spectral distribution being associated with the lamp (1) and in particular the light output opening (4), which filter device (11) comprises a spectral range filter (12, 13, 14) and can be moved relative to the light output opening (4),
**characterized in that:**
the lamp housing (3) and the filter device (11) are substantially tubular and can be rotated relative to one another.

2. Lamp according to claim 1, **characterized in that** the lighting means (2) comprises lighting means groups (6, 7, 8) which each have a different spectral distribution.

3. Lamp according to either claim 1 or claim 2, **characterized in that** the lighting means (2) is formed from separately switchable individual lighting means (9), in particular of different colors.

4. Lamp according to any of the preceding claims, **characterized in that** a lighting means controller (10) is associated with the lighting means (2).

5. Lamp according to any of the preceding claims, **characterized in that** the lighting means controller (10) comprises time control, which can be adjusted in particular manually or automatically.

6. Lamp according to any of the preceding claims, **characterized in that** the lighting means controller (10) comprises brightness and/or direction control for varying the brightness and/or direction of the light beam.

7. Lamp according to any of the preceding claims, **characterized in that** a filter controller (15) is associated with the filter device (11).

8. Lamp according to any of the preceding claims, **characterized in that** a brightness sensor (16) is associated with the lamp (1).

9. Method for controlling a spectral distribution of a lamp (1) having at least one lighting means (2) in a lamp housing (3), which lamp housing comprises at least one light output opening (4) for outputting a light beam from the lamp housing, **characterized by** the following steps:
i) emitting a light beam which is output through the light output opening (4); and
ii) varying the spectral distribution of the light beam by switching different lighting means groups (6, 7, 8) and/or individual lighting means (9), as lighting means (2), on and off in a controlled manner, and/or by controlled adjustment of a filter device (11), the filter device comprising a spectral range filter (12, 13, 14) and being movable relative to the light output opening (4), in that the lamp housing (3) and filter device (11) are substantially tubular and rotate relative to one another.

10. Method according to claim 9, wherein the variation of the spectral distribution in step ii) takes place in a time-controlled manner.

11. Method according to either claim 9 or claim 10, wherein the emission of the light beam takes place with a variable brightness and/or in a variable direction.

12. Method according to any of claims 9 to 11, wherein the light emission of the lighting means (2) takes place in the visible range and optionally in ranges adjacent thereto in the UV range and IR range.

13. Method according to any of claims 9 to 12, wherein the light emission takes place with an adjustable color rendering index, and/or a measurement of an ambient brightness of the lamp (1) takes place by means of the brightness sensor (16), in order to reduce or increase the brightness of the lamp.

## Revendications

1. Luminaire (1) comportant au moins un moyen lumineux (2) dans un boîtier de luminaire (3) qui présente au moins une ouverture de sortie de lumière (4) pour la sortie d'un faisceau lumineux hors du boîtier de luminaire, un dispositif de variation de distribution spectrale (5) faisant varier dans le temps une distribution spectrale du faisceau lumineux étant associé au moyen lumineux (2) et/ou au boîtier de luminaire (3), dans lequel au moins un dispositif de filtre (11) destiné à faire varier la distribution spectrale est associé au luminaire (1) et en particulier à l'ouverture de sortie de lumière (4), lequel dispositif de filtre (11) présente un filtre de zone spectrale (12, 13, 14) et est mobile par rapport à l'ouverture de sortie de lumière (4),
**caractérisé en ce que** :
le boîtier de luminaire (3) et le dispositif de filtration (11) sont sensiblement de forme tubulaire et pivotants l'un par rapport à l'autre.

2. Luminaire selon la revendication 1, **caractérisé en ce que** le moyen lumineux (2) présente des groupes de moyens lumineux (6, 7, 8) comportant respectivement des distributions spectrales différentes.

3. Luminaire selon la revendication 1 ou 2, **caractérisé en ce que** le moyen lumineux (2) est formé de moyens lumineux individuels (9) commutables séparément, en particulier de couleurs différentes.

4. Luminaire selon l'une des revendications précédentes,
**caractérisé en ce qu'**un système de commande de moyen lumineux (10) est associé au moyen lumineux (2).

5. Luminaire selon l'une des revendications précédentes,
**caractérisé en ce que** le système de commande de moyen lumineux (10) présente une minuterie qui peut être réglée en particulier manuellement ou automatiquement.

6. Luminaire selon l'une des revendications précédentes,
**caractérisé en ce que** le système de commande de moyen lumineux (10) présente un système de commande de luminosité et/ou de direction permettant de faire varier la luminosité et/ou la direction du faisceau lumineux.

7. Luminaire selon l'une des revendications précédentes,
**caractérisé en ce qu'**un système de commande de filtre (15) est associé au dispositif de filtre (11).

8. Luminaire selon l'une des revendications précédentes,
**caractérisé en ce qu'**un capteur de luminosité (16) est associé au luminaire (1).

9. Procédé de commande d'une distribution spectrale d'un luminaire (1) comportant au moins un moyen lumineux (2) dans un boîtier de luminaire (3), lequel présente au moins une ouverture de sortie de lumière (4) pour la sortie d'un faisceau lumineux hors du boîtier de luminaire, **caractérisé par** les étapes suivantes :
i) sortie d'un faisceau lumineux sortant par l'ouverture de sortie de lumière (4) ; et
ii) variation de la distribution spectrale du faisceau lumineux par activation et désactivation commandée de différents groupes de moyens lumineux (6, 7, 8) et/ou de moyens lumineux individuels (9) comme moyens lumineux (2) et/ou par déplacement commandé d'un dispositif de filtre (11), dans lequel le dispositif de filtre présente un filtre de zone spectrale (12, 13, 14) et est mobile par rapport à l'ouverture de sortie de lumière (4) du fait de la forme sensiblement tubulaire du boîtier de luminaire (3) et du dispositif de filtre (11) et de leur pivotement l'un par rapport à l'autre.

10. Procédé selon la revendication 9, dans lequel la variation de la distribution spectrale à l'étape ii) se produit de manière programmée.

11. Procédé selon la revendication 9 ou 10, dans lequel la sortie du faisceau lumineux se produit avec une luminosité variable et/ou dans une direction variable.

12. Procédé selon l'une des revendications 9 à 11, dans lequel la sortie de lumière du moyen lumineux (2) se produit dans la zone visible et éventuellement dans des zones adjacentes à celle-ci dans la zone UV et la zone IR.

13. Procédé selon l'une des revendications 9 à 12, dans lequel la sortie de lumière se produit avec un indice de rendu des couleurs réglable et/ou une mesure d'une luminosité ambiante du luminaire (1) est effectuée à l'aide du capteur de luminosité (16) pour réduire ou augmenter la luminosité du luminaire.
